# EUROPÄISCHE PATENTSCHRIFT

(11) **EP 2 150 718 B1**
(45) Veröffentlichungstag und Bekanntmachung des Hinweises auf die Patenterteilung: **28.03.2012**
(21) Anmeldenummer: 08760058.1
(22) Anmeldetag: 27.05.2008
(51) Int. Cl.: F16D 48/06

(54) **VERFAHREN UND VORRICHTUNG ZUR STEUERUNG EINER KUPPLUNG**
METHOD AND DEVICE FOR CONTROLLING A CLUTCH
PROCÉDÉ ET DISPOSITIF DE COMMANDE D'UN EMBRAYAGE

(30) Priorität: 01.06.2007 DE 102007025501
(43) Veröffentlichungstag der Anmeldung: 10.02.2010
(73) Patentinhaber: ZF Friedrichshafen AG, 88038 Friedrichshafen (DE)
(72) Erfinder: PETZOLD, Rainer, 88045 Friedrichshafen (DE); HERTER, Peter, 88212 Ravensburg (DE)
(86) Internationale Anmeldenummer: PCT/EP2008/056460
(87) Internationale Veröffentlichungsnummer: WO 2008/145645

(56) Entgegenhaltungen:
- EP-A- 0 616 142
- EP-A- 0 635 391
- EP-A- 1 491 787
- WO-A-2004/005744
- US-A1- 2004 188 218

## Beschreibung

Die Erfindung betrifft ein Verfahren zur Steuerung einer Kupplung gemäß dem Oberbegriff des Patentanspruchs 1.

Bei Kraftfahrzeugen mit automatisierten Schaltgetrieben oder Automatgetrieben mit einer automatischen Reibkupplung als ansteuerbarem Anfahrelement werden, zur Steuerung der Drehmomentübertragung zwischen dem Antriebsmotor und dem Getriebe, einer elektronischen Steuerungseinrichtung verschiedene betriebsrelevante Sensordaten, wie beispielsweise Motordrehzahl, Getriebeeingangsdrehzahl, Fahrpedalstellung, Fahrgeschwindigkeit und Schaltabsicht zugeführt und nach einer entsprechenden Auswertung ein Aus- oder Einkuppeln der Kupplung, gegebenenfalls mit einem variablen Schließ- bzw. Öffnungsgrad, ausgelöst.

Es ist bekannt, die individuellen Wegverhältnisse bei der Verstellung der Reibpartner derartiger Kupplungen durch das Einlernen charakteristischer Kupplungswegpunkte zu verifizieren, um einen einwandfreien und komfortablen Anfahr- und Schaltbetrieb zu erreichen sowie dauerhaft aufrecht zu halten. Dies erfolgt in der Regel durch zyklische Schließ-/Öffnungsbewegungen der Kupplung, wobei jeweils die relevanten Parameter, beispielsweise die Leerlaufdrehzahl des mit der Kupplungsprimärseite verbundenen Verbrennungsmotors, die Getriebeeingangsdrehzahl einer mit der Kupplungssekundärseite verbundenen Getriebeeingangswelle und der Weggradient beim Einrücken der Kupplung, betrachtet werden. An deren Verlauf bzw. Verhalten können bestimmte Kupplungswegpunkte erkannt und eingelernt bzw. erlernt werden.

Die DE 103 52 611 A1 schlägt beispielsweise ein Verfahren zur Adaption eines als Schleifpunkt mit beginnendem Eingriff festgelegten Kupplungswegpunktes vor, bei dem ein Einlernen des Wegpunktes bei sich öffnender Kupplung über die Erfassung einer Differenzdrehzahl zwischen Antriebsseite und Abtriebsseite der Kupplung erfolgt. Zusätzlich kann zur Berücksichtigung einer Hysterese des Kupplungsweges bei sich schließender Kupplung ein zweiter entsprechender Wegpunkt ermittelt werden.

Die DE 100 54 867 A1 offenbart ein Verfahren zur Adaption eines als Kriechpunkt zur Einstellung eines gewünschten Kriechmomentes festgelegten Kupplungswegpunktes. Dabei wird das tatsächliche Übertragungsmoment mit einem in einem vorausgehenden Zyklus eingestellten Kriechpunkt verglichen und im Falle einer Abweichung von einem gewünschten Kriechmoment bei eingelegtem Anfahrgang ein zwischen einem Schleifpunkt und dem Kriechpunkt liegender Bezugspunkt angenommen, über dem ein neuer Kriechpunkt ermittelt wird, der dem gewünschten Kriechmoment entspricht.

Die EP 0 725 225 B1 beschreibt ein Verfahren zur Ermittlung eines als Berührungspunkt festgelegten Kupplungswegpunktes, bei dem die Kupplung sich mit konstanter Geschwindigkeit in Schließrichtung bewegt und aus einer im zeitlichen Abstand erfassten Drehzahldifferenz einer Getriebeeingangswelle an zwei Stellungen des Schließweges auf einen vor der ersten Stellung liegenden Berührpunkt geschlossen wird.

Weiterhin sind Verfahren bekannt, die ohne eine Einbeziehung motorbezogener Sensordaten oder Getriebeeingangsdrehzahlen auskommen.

Die DE 101 63 438 A1 schlägt ein solches Verfahren zur Ermittlung eines Kupplungsanlegepunktes vor, der als Grenzpunkt einer bei weiterem Einrücken der Kupplung einsetzenden Drehmomentübertragung festgelegt ist. Darin wird eine Stellgröße variiert. Insbesondere wird der Anlegepunkt an einer Unstetigkeit in einem Gradientenverlauf einer Ausrückkraft oder an einer den Wert Null annehmenden Anpresskraft der Kupplung erkannt. Das Verfahren ist auch bei ausgeschaltetem Motor durchführbar.

Die DE 103 06 934 A1 offenbart ein weiteres Verfahren zur Bestimmung eines Anlegepunktes mit beginnender Drehmomentübertragung ohne Einbeziehung motorbezogener Sensordaten, bei dem ein unsynchronisierter Rückwärtsgang benutzt wird. Dabei wird bei stehendem Fahrzeug und laufendem Motor ein Anlegepunkt festgelegt, wenn die Drehmomentübertragung der Kupplung ausreicht, um in einer Zahn-auf-Zahn-Stellung die Zähne einer Schiebemuffe gegen die Zähne eines Kupplungskörpers eines Rückwärtsgangrades zu verschieben. EP 1 491 787 beschreibt ein Verfahren nach dem Oberbegriff des Anspruchs 1.

Die beispielhaft erwähnten Verfahren sowie weitere dem Fachmann an sich bekannte Vorgehensweisen zur Bestimmung anderer benötigter Kupplungswegpunkte, insbesondere die Ermittlung eines Zupunktes, also des Kupplungswegpunktes der vollständig eingerückten Kupplung, durch Schließen der Kupplung bis keine Wegänderung mehr erfolgt, und das sichere Öffnen der Kupplung unter Berücksichtigung eines konstruktiv bedingten Kupplungsweges, führen im Ergebnis zu einem Kupplungsweg-Koordinatensystem bzw. zu einer Koordinatenachse, über das bestimmte Funktionen der Kupplung, beispielsweise die Kupplungsfunktion "Kupplung öffnen beim Schalten" oder die Kupplungsfunktion "Warteposition bei stehendem Fahrzeug mit eingelegtem Gang bis Anfahrwunsch signalisiert wird", realisierbar sind.

Im Kupplungsbetrieb ist zu beachten, dass sich die Wegverhältnisse und damit auch die Drehmomentübertragung der Kupplung über deren Lebensdauer, insbesondere durch Verschleiß, sowie im aktuellen Betrieb durch äußere Einflüsse, beispielsweise unterschiedliche Temperaturen und Drehzahlschwankungen, ändern können. Daher wird der Einlernprozess der genannten Kupplungspositionen bisher üblicherweise bei jeder Kupplungsbetätigung oder zumindest vor jedem Anfahrvorgang durchgeführt, um die relevanten Kupplungswegpunkte entsprechend an die aktuellen Wegverhältnisse anzupassen bzw. zu adaptieren. Zudem wird nach dem jeweiligen Einlernprozess, wenn das Getriebe in Neutralstellung geschaltet ist und der Motor im Leerlauf läuft, in der Regel die Kupplung zunächst geschlossen und dann wieder geöffnet, wenn der Fahrer einen Anfahrgang schalten möchte.

Die bekannte Kupplungssteuerung hat aufgrund der beschriebenen Funktionsabläufe beim Einlernen der Kupplungspositionen den Nachteil, dass der dafür benötigte Zeitraum relativ lang ist und einen möglichen Fahrerwunsch nach einer sehr schnellen Anfahrgangschaltung unter Umständen unnötig verzögert.

Vor diesem Hintergrund liegt der Erfindung die Aufgabe zugrunde, ein Verfahren zur Steuerung einer automatischen Kupplung anzugeben, die eine jeweilige Herstellung der Betriebsbereitschaft der Kupplung, insbesondere für eine Anfahrgangschaltung, nach Möglichkeit zeitlich verkürzen und dennoch eine genaue Kupplungseinstellung gewährleisten. Letztere ermöglicht über die Lebensdauer der Kupplung immer sehr ähnliche Drehmomentübernahmeeigenschaften.

Die Lösung dieser Aufgabe ergibt sich aus den Merkmalen des unabhängigen Ansprüchs 1, während vorteilhafte Ausgestaltungen und Weiterbildungen der Erfindung den zugeordneten Unteransprüchen entnehmbar sind.

Der Erfindung liegt die Erkenntnis zugrunde, dass bei einer automatischen Kupplung anhand eines signifikanten Kupplungswegpunktes überprüft werden kann, ob sich seit dem letzten Einlernvorgang bzw. Betriebszyklus maßgebliche Veränderungen an der Kupplung ergeben haben. Abhängig davon kann auf einen erneuten Einlernprozess von Kupplungswegpositionen unter Umständen komplett verzichtet, einzelne Zwischenschritte ausgelassen oder abgekürzt werden, wodurch die Kupplung meistens in vergleichsweise sehr kurzer Zeit in Betriebsbereitschaft versetzt werden kann.

Demnach geht die Erfindung aus von einem Verfahren zur Steuerung einer Kupplung, beispielsweise einer automatischen Reibkupplung in einem Antriebsstrang eines Kraftfahrzeuges, zur Drehmomentübertragung zwischen einem Antriebsmotor und einem Getriebe, bei dem der Kupplung signifikante Kupplungswegpunkte zugeordnet sind. Zur Lösung der gestellten Aufgabe sieht die Erfindung zunächst verfahrensgemäß vor, dass ein in einem Einlernprozess ermitteltes, wenigstens für einen Anfahrvorgang relevante Kupplungswegpunkte umfassendes Kupplungsweg-Koordinatensystem mit Hilfe einer Überprüfung eines Zupunktes der Kupplung überwacht wird, sowie im Falle einer erkannten Veränderung korrigiert und ansonsten unverändert verwendet wird.

Durch dieses Verfahren werden unnötig lange Einlernzeiten der Kupplung vermieden und somit insbesondere sehr schnelle Anfahrgangschaltungen ermöglicht. Dies wird im Wesentlichen durch die Verwendung des aktuellen Zupunktes der Kupplung als Indikator für die Gültigkeit des gesamten Kupplungsweg-Koordinatensystem erreicht, wobei eine Veränderung des Kupplungsweg-Koordinatensystems erkannt wird, wenn ein aktuell ermittelter Zupunkt von einem zuletzt abgespeicherten Zupunkt über eine vorab bestimmte zulässige Toleranzgrenze hinaus abweicht. Dazu kann der Zupunkt in bewährter Weise zuverlässig ermittelt werden, indem die Kupplung in Richtung schließen betätigt wird, bis keine Wegänderung mehr erfolgt, also der Kupplungsweggradient den Wert Null annimmt.

Von zentraler Bedeutung bei der Steuerung der Kupplung ist ein so genannter Mitnahmepunkt, bei dem nach dem Anlegen der Reibpartner der Kupplung der Reibgriff gerade ausreicht, um die mit der Kupplungs-Sekundärseite verbundene Getriebeeingangswelle des Fahrzeuggetriebes zu drehen. Ist die Kupplung auf diesem Punkt positioniert, kann sie abhängig von einem Anfahrwunsch sehr schnell vollständig eingerückt, ein Anfahrgang unmittelbar geschaltet oder bei ausbleibendem Anfahrwunsch zur Schonung wieder vollständig geöffnet werden.

Demnach kann ein besonders effektiver Ablauf zur Beschleunigung des Einlernvorganges der Kupplung dadurch erfolgen, dass
a) nach der Inbetriebnahme des Antriebsmotors der Zupunkt eingelernt wird,
b) der eingelernte Zupunkt mit dem zuletzt abgespeicherten Zupunkt verglichen wird,
c) bei einer Abweichung des neuen Zupunktes gegenüber dem abgespeicherten Zupunkt über die zulässige Toleranzgrenze hinaus
   ca) ein abgespeicherter Mitnahmepunkt um den Abweichungsbetrag der Verschiebung des neuen Zupunktes verschoben wird, oder
   cb) ein neuer Mitnahmepunkt eingelernt wird und die aktualisierten Kupplungswegpunkte in dem korrigierten Kupplungsweg-Koordinatensystem abgespeichert sowie einer Steuerungseinrichtung zur Verfügung gestellt werden, und
   cc) ansonsten eine Übereinstimmung von neuem Zupunkt und abgespeichertem Zupunkt festgestellt sowie unmittelbar Betriebsbereitschaft signalisiert wird.

Zunächst wird, wenn die Zündung eingeschaltet ist, die gegebenenfalls schon geschlossene Kupplung nochmals in Richtung Schließen bewegt beziehungsweise deren Aktuator solange in Schließrichtung angesteuert, bis keine Wegänderung mehr erfolgt. Damit ist sichergestellt, dass die Kupplung ihre Endposition erreicht hat, also vollständig eingerückt ist. Die entsprechende Kupplungsposition wird als Zupunkt eingelernt. Dieser Zupunkt wird mit dem zuletzt gelernten und in einem nichtflüchtigen Speicher gemerkten Zupunkt verglichen. Sind der neue Zupunkt und der gemerkte Zupunkt gleich oder zumindest sehr nahe beieinander positioniert, so wird davon ausgegangen, dass sich seit dem letzten Betriebszyklus bzw. seit der letzten Überprüfung mit oder ohne Einlernzyklus keine wesentlichen Veränderungen an der Kupplung ergeben haben. In diesem Fall wird auf das Einlernen des Mitnahmepunktes verzichtet und der Mitnahmepunkt sowie der Zupunkt vom letzten Einlernvorgang benutzt. Das Kupplungssystem ist somit sofort betriebsbereit. Wird hingegen eine nicht vernachlässigbare Abweichung zwischen dem neuem und dem gemerkten Zupunkt erkannt, bestehen zwei Möglichkeiten.

Zum einen kann der gemerkte Mitnahmepunkt einfach mitverschoben werden. Dabei ist, zumindest wenn seit dem letzten Betriebszyklus / Einlernzyklus nur ein vergleichsweise geringer Zeitraum verstrichen ist, in guter Näherung davon auszugehen, dass der Abstand zwischen dem Zupunkt und dem Mitnahmepunkt konstant ist. Entsprechend wird der Mitnahmepunkt um den Betrag der Verschiebung zwischen dem bisherigen und den neuen Zupunkt korrigiert. Dies hat den Vorteil, dass der Mitnahmepunkt innerhalb kürzester Zeit festgelegt ist, wodurch insgesamt der Einlernprozess verkürzt wird.

Zum anderen kann ein neuer Mitnahmepunkt eingelernt werden, wodurch eine besonders hohe Genauigkeit der Kupplungseinstellung erreicht wird. Dies sollte eher durchgeführt werden, wenn eine vergleichsweise längere Zeit seit dem letzten Einlernzyklus und/oder Betriebszyklus verstrichen ist.

Zum Erlernen eines neuen Mitnahmepunktes kann vorteilhaft vorgesehen sein, dass nach dem Einschalten der Zündung des Verbrennungsmotors oder allgemein nach der Inbetriebnahme des Antriebsmotors der Zupunkt eingelernt wird, anschließend die Kupplung unter Berücksichtigung eines konstruktiv vorgegebenen Mindestauskuppelweges geöffnet wird und schließlich die Kupplung bei laufendem Antriebsmotor bis zur Überschreitung einer über eine Drehzahlüberwachung einer getriebeseitigen Sekundärseite der Kupplung festgestellten vorgegebenen Drehzahlschwelle am Getriebeeingang, in Schließrichtung bewegt wird. Der so ermittelte Mitnahmepunkt wird als neuer Mitnahmepunkt abgespeichert.

In Versuchsreihen zum Einlernen des Mitnahmepunktes hat sich überraschenderweise ein nicht vernachlässigbarer Trägheitseffekt beim Einrücken der Kupplung gezeigt. Dabei wurde, unter Berücksichtigung von Messfehlern, in einem weiten Kupplungswegbereich ein linearer Zusammenhang zwischen der ermittelten Position des Mitnahmepunktes und der Einrückgeschwindigkeit der Kupplung erkannt, wobei der Mitnahmepunkt um so weiter in Richtung geschlossener Kupplung wandert, je schneller die Kupplung einrückt. Ursächlich kann dieses Verhalten darauf zurückgeführt werden, dass die Mitnahme der Getriebeeingangswelle dem Reibgriff der Reibpartner zeitlich verzögert folgt, wodurch zum Zeitpunkt der Erkennung des Mitnahmepunktes anhand der Drehzahlüberwachung die Kupplung schon über die Lage des tatsächlichen Mitnahmepunktes hinaus weiter eingerückt ist. Die Messungen ergaben einen erheblich weiter in Richtung geöffneter Kupplung liegenden tatsächlichen Mitnahmepunkt gegenüber einem ohne Berücksichtigung der Einrückgeschwindigkeit erkannten Mitnahmepunkt.

Daher ist es sinnvoll, den Einlernvorgang des Mitnahmepunktes bezüglich der Einrückgeschwindigkeit und der Erkennungsdrehzahl besonders sensibel einzustellen. Die Berücksichtung der beschriebenen Einrückgeschwindigkeits-Abhängigkeit kann vorteilhaft dadurch erfolgen, dass bei der Schließbewegung der Kupplung eine Soll-Einrückgeschwindigkeit bei Annäherung an den zuletzt gespeicherten Mitnahmepunkt verringert wird. Vorzugsweise wird eine sehr geringe Einrückgeschwindigkeit gewählt. Um den Einlernvorgang dadurch aber nicht unnötig zu verlängern, wird die Sollgeschwindigkeit erst unmittelbar vor der erwarteten, also vor der vom letzten Einlernvorgang gemerkten Mitnahmeposition reduziert. Gegenüber einem herkömmlichen Einlernvorgang zum Einlernen eines Mitnahmepunktes ergibt sich somit kein Zeitnachteil.

Unter der Prämisse, die Kupplung auf einen Kupplungswegpunkt mit marginaler Drehmomentübertragung positionieren zu wollen, kann durch die Verringerung der Einrückgeschwindigkeit bei Annäherung an den Mitnahmepunkt und die Einstellung einer möglichst niedrigen Drehzahlschwelle nahe Null, beispielsweise bei 5 Umdrehungen pro Minute, zur Erkennung der Mitnahme der Getriebeeingangswelle sowie durch eine anschließende Korrektur des erkannten Mitnahmepunktes auf die erfasste Ist-Einrückgeschwindigkeit, eine sehr treffgenaue und reproduzierbare Einstellung der Kupplung erreicht werden.

Dieser eingelernte sensitive Mitnahmepunkt kann vorteilhaft direkt als Kupplungsposition sehr geringen übertragenen Drehmomentes übernommen und die Kupplung beim Einlernen des Punktes sofort darauf positioniert werden. Da die Kupplung dabei (noch) relativ weit geöffnet ist, muss sie für eine nachfolgende Anfahrgangschaltung nicht erst geschlossen und dann wieder geöffnet werden, sondern kann direkt als Ausgangposition für eine innerhalb eines bestimmten Zeitraums zu erwartende Sollganganforderung oder Nebenabtriebs-Einschaltanforderung oder zur unmittelbaren Umsetzung einer bereits vorgemerkten Sollgangschaltung oder Nebenabtriebseinschaltung dienen. Dadurch kann zumindest eine Kupplungsbewegung wegfallen, wodurch sich eine weitere Zeitersparnis zur Erzielung einer sehr schnellen Anfahrgangschaltung ergibt.

Weiterhin kann der eingelernte Mitnahmepunkt als Kupplungswegpunkt mit geringer Drehmomentübertragung für eine Grundeinstellung verwendet werden, wenn das Fahrzeug mit eingelegtem Anfahrgang steht. Abhängig von diesem Mitnahmepunkt kann die Kupplung bei stehendem Fahrzeug auch auf einen definierten Ruhepunkt bei offener Kupplung positioniert werden, um bei längerem Stillstand ohne Anfahrwunsch oder bei betätigter Bremse die Kupplung zu schonen.

Eine Vorrichtung, die zur Durchführung des vorstehend beschriebenen erfindungsgemäßen Verfahrens besonders gut geeignet ist, ist durch die Merkmale des unabhängigen Anspruchs 14 definiert.

Demnach geht die Erfindung aus von einer Vorrichtung zur Steuerung einer Kupplung, beispielsweise einer automatischen Reibkupplung in einem Antriebsstrang eines Kraftfahrzeuges, zur Drehmomentübertragung zwischen einem Antriebsmotor und einem Getriebe, mit einer Steuerungseinrichtung zum Einlernen und Speichern von Kupplungswegpunkten.

Zur Lösung der gestellten Aufgabe sieht die Erfindung zudem vor, dass der Steuerungseinrichtung Mittel zur Verifikation eines abgespeicherten Kupplungswegpunkt-Koordinatensystems sowie zur ortsaufgelösten Variation und Verifikation einer Einrückgeschwindigkeit der Kupplung sowie zur Erfassung und Verarbeitung wenigstens einer beginnenden Drehbewegung einer getriebeeingangsseitigen Sekundärseite der Kupplung zugeordnet sind.

Durch die erfindungsgemäße Vorrichtung wird eine sehr flexible Handhabung des Einlernens der Kupplung ermöglicht. Einerseits können die für die Kupplungssteuerung notwendigen Kupplungswegpunkte überprüft und das Kupplungswegpunkt-Koordinatensystem gegebenenfalls entsprechend korrigiert werden. Insbesondere kann dazu ein Zupunkt des Kupplungsstellweges verifiziert und ein Mitnahmepunkt dem Zupunkt besonders schnell angepasst oder ein neuer unabhängiger Mitnahmepunkt des Kupplungsstellweges besonders sensitiv eingestellt werden. Andererseits kann auch das zuletzt abgespeicherte Koordinatensystem direkt benutzt werden, um die Kupplung besonders schnell in Betriebbereitschaft zu versetzen.

Zur Verdeutlichung der Erfindung ist der Beschreibung eine Zeichnung eines Ausführungsbeispiels beigefügt. In dieser zeigt
- Fig. 1: ein Flussdiagramm eines Verfahrens zur Steuerung einer Kupplung, und
- Fig. 2: ein Messdiagramm zum Einlernprozess von Kupplungswegpunkten der Kupplung.

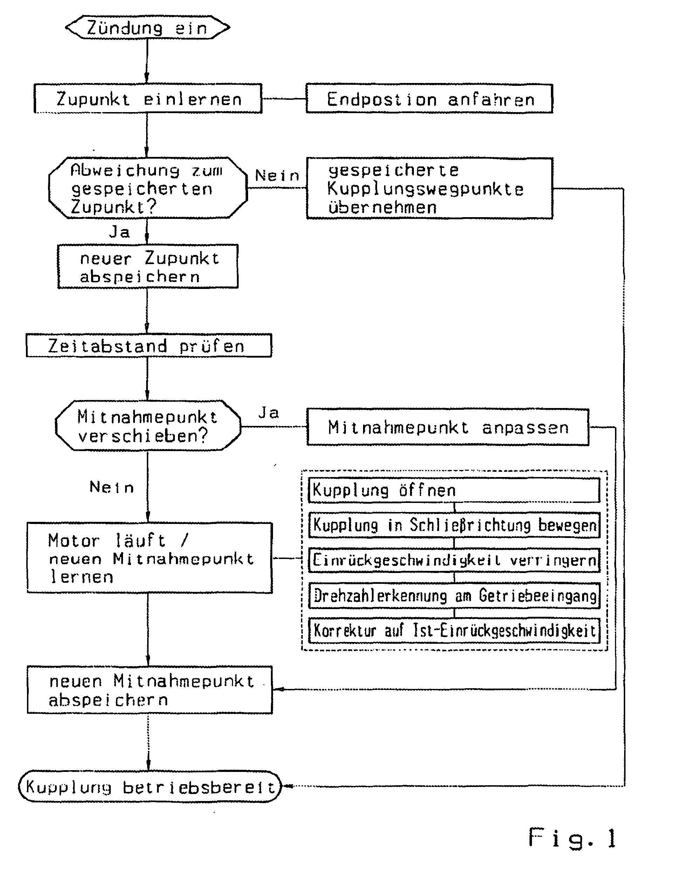

In Fig. 1 ist folglich ein Ablauf zur Herstellung einer Betriebsbereitschaft einer automatischen Reibkupplung in einem Kraftfahrzeug-Antriebsstrang dargestellt. Demnach wird bei einem mit eingeschalteter Zündung stehenden Fahrzeug zunächst ein Zupunkt des Kupplungsbetätigungsweges eingelernt. Dies erfolgt durch Ansteuern des Kupplungsaktuators der gegebenenfalls schon geschlossenen Kupplung in Schließrichtung, bis beim Erreichen einer Endposition keine Wegänderung mehr erfolgt. Der eingelernte Zupunkt wird mit dem zuletzt abgespeicherten Zupunkt verglichen. Stimmt der neue Zupunkt mit dem gemerkten Zupunkt wenigstens annähernd überein, so wird auf das erneute Einlernen eines Mitnahmepunktes verzichtet und das zuletzt abgespeicherte Kupplungsweg-Koordinatensystem mit dem Zupunkt und dem Mitnahmepunkt des letzten Einlernvorgangs übernommen. Die Kupplung geht unmittelbar danach in Betriebsbereitschaft.

Unterscheidet sich der neu gelernte Zupunkt signifikant von dem zuletzt gespeicherten Zupunkt, so wird der neue Wert abgespeichert und in Abhängigkeit von der Zeitspanne zum letzten Betriebszyklus bzw. Einlernvorgang entweder der zuletzt gespeicherte Mitnahmepunkt um den Differenzbetrag zwischen neuem Zupunkt und bisherigen Zupunkt verschoben oder ein neuer Mitnahmepunkt eingelernt.

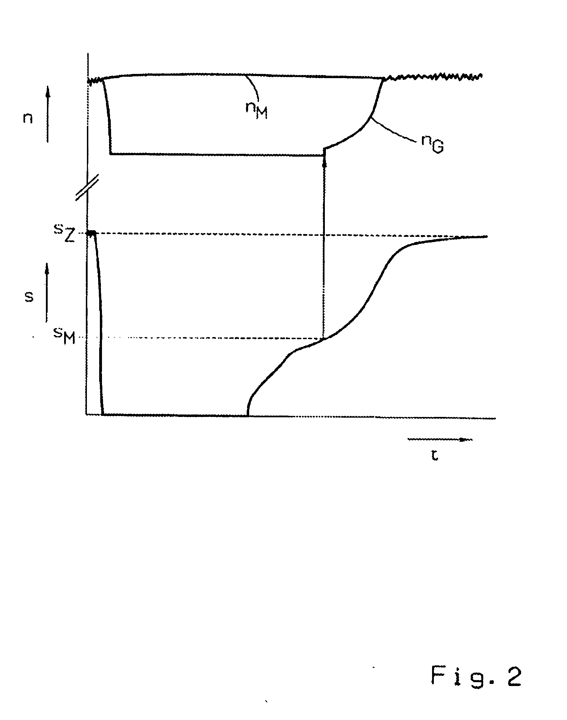

Die Fig. 2 zeigt im unteren Teil einen Verlauf des Kupplungsweges s über der Zeit t sowie im oberen Teil einen Verlauf der Getriebeeingangsdrehzahl n_{G} beim Einlernprozess eines neuen Mitnahmepunktes über der Zeit t. Weiterhin ist oben der weitgehend konstante zeitliche Verlauf der Motordrehzahl n_{M} dargestellt.

Dabei ist die Kupplung zunächst vollständig eingerückt und befindet sich auf der Position s_{Z} des Zupunktes. Anschließend wird die Kupplung vollständig geöffnet, wodurch die Getriebeeingangsdrehzahl n_{G} auf den Wert Null abfällt. Anschließend wird die Kupplung in Schließrichtung betätigt. Dabei wird die Getriebeeingangsdrehzahl n_{G} und die Einrückgeschwindigkeit der Kupplung beobachtet. Bei Annäherung an den zuletzt gespeicherten Mitnahmepunkt wird die Kupplungsbewegung auf eine niedrigere Einrückgeschwindigkeit abgebremst. Dies ist in dem Diagramm an dem temporär abgeflachten Wegverlauf der Kurve erkennbar.

Die Getriebeeingangswelle wird von der Kupplungssekundärseite mitgenommen bzw. beginnt sich zu drehen, wenn die Drehzahl n_{G} am Getriebeeingang bei einem bestimmten Einrückgrad der Kupplung steigt bzw. eine Drehzahl registriert wird. In dem Diagramm ist dies durch einen auf einen markanten Drehzahlsprung im Drehzahlverlauf n_{G} zeigenden Pfeil angedeutet.

Da, wie bereits erläutert, der registrierte Mitnahmepunkt dem tatsächlichen Mitnahmepunkt nacheilt, wird die registrierte Kupplungsposition und die dazu gehörige erfasste Ist-Einrückgeschwindigkeit mit einer abgespeicherten Geschwindigkeitskennlinie des Mitnahmepunktes verglichen und daraufhin die Position mit einem Korrekturwert versehen. Daraus wird die tatsächliche Position s_{M} des neuen Mitnahmepunktes bestimmt. Nach dem Abspeichern des neuen Mitnahmepunktes ist das System betriebsbereit für eine Anfahrgangschaltung. Dieser Verfahrensablauf ist in Fig. 1 in dem gestrichelt gezeichneten Rechteck dargestellt.

Schließlich zeigt die Fig. 2, dass sich bei einem weiteren Einrücken der Kupplung die Getriebeeingangsdrehzahl n_{G} bis spätestens zum Erreichen der Position s_{Z} des Zupunktes der Motordrehzahl n_{M} angleicht, wobei die Motordrehzahl n_{M} durch einen vorhandenen Leerlaufregler, der den Drehzahlverlust beim Reibschluss der Kupplung durch eine entsprechende Erhöhung der Leerlaufeinspritzmenge ausgleicht, auf einer konstanten Solldrehzahl gehalten wird.

### Bezugszeichenliste

- n: Drehzahl
- n_{G}: Getriebeeingangsdrehzahl
- n_{M}: Motordrehzahl
- s: Kupplungsweg
- s_{M}: Mitnahmeposition, Mitnahmepunkt
- s_{Z}: Zupunktposition, Zupunkt
- t: Zeit

## Patentansprüche

1. Verfahren zur Steuerung einer Kupplung, beispielsweise einer automatischen Reibkupplung in einem Antriebsstrang eines Kraftfahrzeuges, zur Drehmomentübertragung zwischen einem Antriebsmotor und einem Getriebe, bei dem der Kupplung signifikante Kupplungswegpunkte zugeordnet sind, wobei ein in einem Einlernprozess ermitteltes, wenigstens für einen Anfahrvorgang relevante Kupplungswegpunkte umfassendes Kupplungsweg-Koordinatensystem mit Hilfe einer Überprüfung eines Zupunktes (s_{Z}) der Kupplung überwacht wird, sowie im Falle einer erkannten Veränderung korrigiert und ansonsten unverändert verwendet wird, **dadurch gekennzeichnet, dass** zum Erlernen eines neuen Mitnahmepunktes (s_{M})
a) nach der Inbetriebnahme des Antriebsmotors der Zupunkt eingelernt wird,
b) die Kupplung unter Berücksichtigung eines konstruktiv vorgegebenen Mindestauskuppelweges geöffnet wird,
c) die Kupplung bei laufendem Antriebsmotor bis zur Überschreitung einer über eine Drehzahlüberwachung einer getriebeseitigen Sekundärseite der Kupplung festgestellten vorgegebenen Drehzahlschwelle am Getriebeeingang in Schließrichtung bewegt wird, und
d) der ermittelte Mitnahmepunkt (s_{M}) abhängig von einer erfassten Ist-Einrückgeschwindigkeit korrigiert wird.

2. Verfahren nach Anspruch 1, **dadurch gekennzeichnet, dass** eine Veränderung des Kupplungsweg-Koordinatensystems erkannt wird, wenn ein aktuell ermittelter Zupunkt (s_{Z}) von einem zuletzt abgespeicherten Zupunkt über eine vorab bestimmte zulässige Toleranzgrenze hinaus abweicht.

3. Verfahren nach Anspruch 1 oder 2, dadurch **gekennzeich**n e t , dass zum Einlernen des Zupunktes (s_{Z}) eine Endposition, bei der der Kupplungsweggradient den Wert Null annimmt, angefahren wird.

4. Verfahren nach zumindest einem der Ansprüche 1 bis 3, **dadurch gekennzeichnet, dass**
a) nach der Inbetriebnahme des Antriebsmotors der Zupunkt eingelernt wird,
b) der eingelernte Zupunkt (s_{Z}) mit dem zuletzt abgespeicherten Zupunkt verglichen wird,
c) bei einer Abweichung des neuen Zupunktes (s_{Z}) gegenüber dem abgespeicherten Zupunkt über die zulässige Toleranzgrenze hinaus
ca) ein abgespeicherter Mitnahmepunkt um den Abweichungsbetrag der Verschiebung des neuen Zupunktes (s_{Z}) verschoben wird, oder
cb) ein neuer Mitnahmepunkt (s_{M}) eingelernt wird und die aktualisierten Kupplungswegpunkte in dem korrigierten Kupplungsweg-Koordinatensystem abgespeichert sowie einer Steuerungseinrichtung zur Verfügung gestellt werden, und
cc) ansonsten eine Übereinstimmung von neuem Zupunkt (s_{Z}) und abgespeichertem Zupunkt festgestellt und unmittelbar Betriebsbereitschaft signalisiert wird.

5. Verfahren nach zumindest einem der Ansprüche 1 bis 4, **dadurch gekennzeichnet, dass** ein neuer Mitnahmepunkt (s_{M}) eingelernt wird, wenn eine Veränderung des Kupplungsweg-Koordinatensystems erkannt wird und seit dem letzten zurückliegenden Einlernprozess und/oder Betriebszyklus der Kupplung eine vorgegebene maximale Zeitspanne überschritten ist.

6. Verfahren nach Anspruch 1, **dadurch gekennzeichnet, dass** bei der Schließbewegung der Kupplung eine Soll-Einrückgeschwindigkeit bei Annäherung an den zuletzt gespeicherten Mitnahmepunkt verringert wird.

7. Verfahren nach Anspruch 1 oder 6 **dadurch gekennzeichnet, dass** die Drehzahlschwelle zur Erkennung des Mitnahmepunktes (s_{M}) bei nahe Null Umdrehungen pro Minute voreingestellt wird.

8. Verfahren nach zumindest einem der Ansprüche 1 bis 7, **dadurch gekennzeichnet, dass** der eingelernte Mitnahmepunkt (s_{M}) als Ausgangspunkt für eine innerhalb eines bestimmten Zeitraums zu erwartende Sollganganforderung oder Nebenabtriebs-Einschaltanforderung oder eine bereits vorgemerkte Sollgangschaltung oder Nebenabtriebseinschaltung verwendet wird.

9. Verfahren nach zumindest einem der Ansprüche 1 bis 8, **dadurch gekennzeichnet, dass** der eingelernte Mitnahmepunkt (s_{M}) als Kupplungswegpunkt mit geringer Drehmomentübertragung für eine Grundeinstellung bei mit eingelegtem Anfahrgang stehendem Fahrzeug verwendet wird.

10. Verfahren nach zumindest einem der Ansprüche 1 bis 9, **dadurch gekennzeichnet, dass** abhängig von dem eingelernten Mitnahmepunkt (s_{M}) wenigstens ein weiterer Kupplungswegpunkt bestimmt wird.

11. Verfahren nach Anspruch 10, **dadurch gekennzeichnet, dass** abhängig von dem Mitnahmepunkt (s_{M}) unter Berücksichtigung des Mindestauskuppelweges ein Ruhepunkt bestimmt wird, bei dem die Kupplung geöffnet ist.

## Claims

1. Method for controlling a clutch, for example an automatic friction clutch in a drivetrain of a motor vehicle, for transmitting torque between a drive engine and a transmission, in which method significant clutch travel points are assigned to the clutch, with a clutch travel coordinate system, which is determined in a teaching process and which comprises at least clutch travel points relevant to a starting process, being monitored by means of a check of a closed point (s_{Z}) of the clutch and being corrected if a change is identified and otherwise being used unchanged, **characterized in that**,
to acquire a new driving point (s_{M})
a) after the start-up of the drive engine, the closed point is taught,
b) the clutch is opened taking into consideration a structurally predefined minimum clutch disengagement travel,
c) with the drive engine running, the clutch is moved in the closing direction until a predefined rotational speed threshold, established by means of rotational speed monitoring of a transmission-side secondary side of the clutch, at the transmission input is exceeded, and
d) the determined driving point (s_{M}) is corrected as a function of a measured actual engagement speed.

2. Method according to Claim 1, **characterized in that** a change in the clutch travel coordinate system is detected if a presently determined closed point (s_{Z}) deviates from a most recently stored closed point beyond a predetermined admissible tolerance limit.

3. Method according to Claim 1 or 2, **characterized in that**, to teach the closed position (s_{Z}), the clutch is moved into an end position at which the clutch travel gradient assumes the value zero.

4. Method according to at least one of Claims 1 to 3, **characterized in that**
a) after the start-up of the drive engine, the closed point is taught,
b) the taught closed point (s_{Z}) is compared with the most recently stored closed point,
c) if the new closed point (s_{Z}) deviates from the stored closed point beyond the admissible tolerance limit,
ca) a stored driving point is shifted by the magnitude of the deviation of the shift of the new closed point (s_{Z}), or
cb) a new driving point (s_{M}) is taught and the updated clutch travel points are stored in the corrected clutch travel coordinate system and made available to a control device, and
cc) otherwise a correlation of the new closed point (s_{Z}) and stored closed point is established and operational readiness is immediately signalled.

5. Method according to at least one of Claims 1 to 4, **characterized in that** a new driving point (s_{M}) is taught if a change in the clutch travel coordinate system is detected and a predefined maximum time period since the most recent past teaching process and/or operating cycle of the clutch has been exceeded.

6. Method according to Claim 1, **characterized in that**, during the closing movement of the clutch, a nominal engagement speed is reduced when the most recently stored driving point is approached.

7. Method according to Claim 1 or 6, **characterized in that** the rotational speed threshold for the detection of the driving point (s_{M}) is preset to close to zero revolutions per minute.

8. Method according to at least one of Claims 1 to 7, **characterized in that** the taught driving point (s_{M}) is used as a starting point for a nominal gear demand or auxiliary drive output activation demand to be expected within a certain time period or an already planned nominal gear shift or auxiliary drive output activation.

9. Method according to at least one of Claims 1 to 8, **characterized in that** the taught driving point (s_{M}) is used as a clutch travel point with low torque transmission for a basic setting when the vehicle is stationary with a starting gear engaged.

10. Method according to at least one of Claims 1 to 9, **characterized in that** at least one further clutch travel point is determined as a function of the taught driving point (s_{M}).

11. Method according to Claim 10, **characterized in that**, as a function of the driving point (s_{M}) and taking into consideration the minimum clutch disengagement travel, a rest point is determined at which the clutch is open.

## Revendications

1. Procédé de commande d'un embrayage, par exemple d'un embrayage à friction automatisé, dans une chaîne cinématique d'un véhicule automobile, pour le transfert de couple entre un moteur d'entraînement et une boîte de vitesses, dans lequel on associe à l'embrayage des points de course d'embrayage importants, un système de coordonnées de course d'embrayage comprenant des points de course d'embrayage importants au moins pour une opération de démarrage, détecté dans un processus d'apprentissage, étant surveillé à l'aide d'une vérification d'un point de fermeture (s_{Z}) de l'embrayage, et dans le cas d'un écart détecté, étant corrigé et autrement utilisé sans correction, **caractérisé en ce que** pour l'apprentissage d'un nouveau point d'entraînement (s_{M}),
a) après la mise en route du moteur d'entraînement, le point de fermeture est appris,
b) l'embrayage est ouvert en tenant compte d'une course de désaccouplement minimale prédéfinie par la construction,
c) l'embrayage est déplacé dans la direction de fermeture lorsque le moteur d'entraînement tourne jusqu'à dépasser un seuil de régime prédéfini au niveau de l'entrée de la boîte de vitesses, établi par le biais d'une surveillance de régime d'un côté secondaire de l'embrayage, du côté de la boîte de vitesses, et
d) le point d'entraînement déterminé (s_{M}) est corrigé en fonction d'une vitesse d'embrayage actuelle détectée.

2. Procédé selon la revendication 1, **caractérisé en ce qu'**une variation du système de coordonnées de course d'embrayage est détectée lorsqu'un point de fermeture détecté actuellement (s_{Z}) s'écarte d'un point de fermeture préalablement mémorisé au-delà d'une limite de tolérance admissible prédéterminée.

3. Procédé selon la revendication 1 ou 2, **caractérisé en ce que** pour l'apprentissage du point de fermeture (s_{Z}), on avance jusqu'à une position d'extrémité à laquelle le gradient de course d'embrayage a la valeur zéro.

4. Procédé selon au moins l'une quelconque des revendications 1 à 3, **caractérisé en ce que**
a) après la mise en route du moteur d'entraînement, le point de fermeture est appris,
b) le point de fermeture appris (s_{Z}) est comparé avec le dernier point de fermeture mémorisé,
c) en cas d'écart du nouveau point de fermeture (s_{Z}) avec le point de fermeture mémorisé au-delà de la limite de tolérance admissible,
ca) un point d'entraînement mémorisé est déplacé de la valeur de l'écart du déplacement du nouveau point de fermeture (s_{Z}), ou
cb) un nouveau point d'entraînement (s_{M}) est appris et les points de course d'embrayage actualisés sont mémorisés dans le système de coordonnées de course d'embrayage corrigé, et sont mis à disposition d'un dispositif de commande, et
cc) sinon, une mise en coïncidence du nouveau point de fermeture (s_{Z}) avec le point de fermeture mémorisé est établie et une disponibilité immédiate est signalée.

5. Procédé selon au moins l'une quelconque des revendications 1 à 4, **caractérisé en ce qu'**un nouveau point d'entraînement (s_{M}) est appris quand une modification du système de coordonnées de course d'embrayage est détectée et qu'un intervalle de temps maximal prédéfini est dépassé depuis le dernier processus d'apprentissage et/ou cycle de fonctionnement précédent de l'embrayage.

6. Procédé selon la revendication 1, **caractérisé en ce que** lors du mouvement de fermeture de l'embrayage, une vitesse d'embrayage de consigne est réduite lorsque l'on se rapproche du point d'entraînement mémorisé en dernier.

7. Procédé selon la revendication 1 ou 6, **caractérisé en ce que** le seuil de régime pour détecter le point d'entraînement (s_{M}) est préajusté à pratiquement zéro rotation par minute.

8. Procédé selon au moins l'une quelconque des revendications 1 à 7, **caractérisé en ce que** le point d'entraînement appris (s_{M}) est utilisé comme point de départ pour une demande de vitesse de consigne attendue en l'espace d'un certain intervalle de temps ou une demande d'enclenchement d'une prise de force secondaire ou un changement de vitesse de consigne déjà noté ou un enclenchement de prise de force secondaire déjà noté.

9. Procédé selon au moins l'une quelconque des revendications 1 à 8, **caractérisé en ce que** le point d'entraînement appris (s_{M}) est utilisé comme point de course d'embrayage avec un faible transfert de couple pour un ajustement de base lorsque le véhicule stationnaire est à une vitesse de démarrage enclenchée.

10. Procédé selon au moins l'une quelconque des revendications 1 à 9, **caractérisé en ce que** l'on détermine au moins un autre point de course d'embrayage en fonction du point d'entraînement appris (s_{M}).

11. Procédé selon la revendication 10, **caractérisé en ce que** l'on détermine, en fonction du point d'entraînement (s_{M}) et en tenant compte de la course de désaccouplement minimale, un point de repos auquel l'embrayage est ouvert.
